# EUROPÄISCHE PATENTSCHRIFT

(11) **EP 0 929 833 B1**
(45) Veröffentlichungstag und Bekanntmachung des Hinweises auf die Patenterteilung: **05.12.2001**
(21) Anmeldenummer: 97909289.7
(22) Anmeldetag: 18.09.1997
(51) Int. Cl.: G02B 7/182, G02B 26/08, F24J 2/10

(54) **JUSTIERBARER REFLEKTOR**
ADJUSTABLE REFLECTOR
REFLECTEUR AJUSTABLE

(30) Priorität: 01.10.1996 DE 29617111 U
(43) Veröffentlichungstag der Anmeldung: 21.07.1999
(73) Patentinhaber: O'Hara-Smith, Stephen C., Celbridge, County Kildare (IE)
(72) Erfinder: O'Hara-Smith, Stephen C., Celbridge, County Kildare (IE)
(74) Vertreter: Kehl, Günther, Dipl.-Phys.
(86) Internationale Anmeldenummer: EP9705122
(87) Internationale Veröffentlichungsnummer: WO9814815

(56) Entgegenhaltungen:
- FR-A- 2 688 601
- GB-A- 2 255 195
- US-A- 4 304 218
- PATENT ABSTRACTS OF JAPAN vol. 009, no. 272 (M-425), 30.Oktober 1985 & JP 60 117053 A (SHIYOUZOU YAMAKI), 24.Juni 1985,

## Beschreibung

Die Erfindung bezieht sich auf einen justierbaren Reflektor, der mehrere, jeweils eine Reflektorfläche aufweisende Reflektorelemente aufweist, die schwenkbar angeordnet sind.

Reflektoren werden im allgemeinen verwendet, um elektromagnetische Strahlung, wie beispielsweise Licht, umzulenken. Reflektoren werden dabei häufig zu Werbezwecken, im Zusammenhang mit Signalisierungseinrichtungen oder zu dem Zweck verwendet, Sonnenlicht in eine bestimmte Richtung, beispielsweise auf einen Solarkollektor zu lenken. Um den Reflexionswinkel zu ändern, beispielsweise in Anpassung an einen sich verändernden Sonnenstand, müssen die Reflektoren oder deren Reflektorelemente geschwenkt werden.

Ein gattungsgemäßer justierbarer Reflektor ist aus der GB 2 255 195 A bekannt. Um die Richtung der Flächennormale der Reflektorfläche und damit die Richtung des reflektierten Strahles zu ändern, ist es bei dem gattungsgemäßen Reflektor nicht erforderlich, den gesamten, oft sehr voluminösen Reflektor auszurichten; vielmehr reicht es aus, die gattungsgemäß schwenkbar angeordneten einzelnen Reflektorelemente so zu justieren, daß die Flächennormale ihrer jeweiligen Reflektorfläche eine gewünschte Richtung aufweist und somit einen gewünschten Reflexionswinkel hervorruft. Zu gattungsgemäßen Reflektoren gemäß dem Stand der Technik wird des weiteren auf die US 4 304 218 und auf die FR 2 688 601 verwiesen.

Bei den bekannten justierbaren Reflektoren hat sich jedoch die Kopplung der Reflektorelemente zur parallelen gemeinsamen Schwenkung derselben als großes technisches Problem erwiesen. Die hieran gestellten Anforderungen im Hinblick auf die Genauigkeit und Schnelligkeit der Richtungsänderung der Reflektorelemente konnten bei den Reflektoren gemäß dem Stand der Technik aufgrund der komplizierten Struktur der Reflektorelemente und/oder des Betätigungsmechanismus nur in ausgesprochen unzureichender Weise erfüllt werden. Auch konnten die bekannten Reflektoren bei bedarfsgesteuerten Systemen nicht eingesetzt werden, bei denen das Problem besteht, mit kurzer Responszeit die Leistung eines Sonnenkollektors durch Justierung bzw. "Dejustierung" des Reflektors zu verändern.

Ausgehend von diesen Unzulänglichkeiten und Nachteilen des Standes der Technik liegt der Erfindung die Aufgabe zugrunde, einen justierbaren Reflektor zu schaffen, der vergleichsweise klein baut, widerstandsfähig, robust und kostengünstig herzustellen ist und der mit vergleichsweise wenig aufwendigen Vorrichtungen bei kurzen Ansprechzeiten ausgerichtet, das heißt justiert, werden kann. Hierbei soll die Kopplung der Reflektorelemente zur parallelen gemeinsamen Schwenkung derselben in konstruktiv besonders einfacher und eleganter Weise erzielt werden.

Diese Aufgabe ist dadurch gelöst, daß es sich bei den Reflektorelementen um zumindest teilweise transparente Kugeln handelt, die zwischen zwei planparallelen Platten eingespannt sind, von denen mindestens eine Platte aus einem transparenten Material besteht, wobei mindestens eine der beiden Platten relativ zur anderen der beiden Platten unter Beibehaltung ihres Abstands zur anderen Platte verschiebbar ist.

Indem die kugelförmigen Reflektorelemente nach der Lehre der Erfindung zwischen zwei planparallelen Platten eingespannt sind, von denen mindestens eine Platte aus einem transparenten Material besteht, läßt sich überraschenderweise eine Kopplung der Reflektorelemente zur parallelen gemeinsamen Schwenkung derselben in konstruktiv besonders einfacher und eleganter Weise erzielen.

Da erfindungsgemäß eine dieser beiden Platten relativ zur anderen der Platten unter Beibehaltung ihres Abstands verschiebbar ist, werden durch eine entsprechende Verschiebung die zwischen den beiden Platten eingespannten kugelförmigen Reflektorelemente gleichsinnig gedreht, wodurch die Flächennormale ihrer Reflektorflächen in der gewünschten Weise justiert oder geschwenkt wird. Eine Relativbewegung zwischen den beiden Platten in der Größenordnung von einem Umfang der Reflektorkugeln läßt eine Verschwenkung der Flächennormalen der Reflektorflächen um 180° zu. Das bedeutet, daß bei einem bevorzugten Kugeldurchmesser von beispielsweise 2,5 cm und einem Kugelumfang von etwa 7,85 cm bereits bei Verschiebung einer Platte um 7,85 cm der volle Justierbereich von 180° überstrichen wird. In der Praxis sind jedoch weitaus kleinere Justierbereiche ausreichend. Wegen der kurzen Justierwege kann die Justierung hierbei innerhalb von wenigen Sekunden durchgeführt werden. Infolge der kurzen Reaktionszeiten bei dem erfindungsgemäßen Reflektor kann dieser auch bei bedarfsgesteuerten Systemen eingesetzt werden, bei denen das Problem besteht, mit kurzer Responszeit die Leistung eines Sonnenkollektors durch Justierung bzw. "Dejustierung" des Reflektors zu verändern.

Nach einer besonders vorteilhaften Ausführungsform der Erfindung sind die Reflektorelemente in mindestens zwei Richtungen schwenkbar, so daß die Flächennormale der Reflektorelemente nahezu jede Richtung im Bereich einer Halbkugel überstreichen kann.

Besonders vorteilhaft ist dabei, wenn die Reflektorelemente gegenseitig gekoppelt und gemeinsam, vorzugsweise parallel, schwenkbar sind. Eine individuelle Justierung der einzelnen Reflektorelemente entfällt dadurch.

Die Reflektorfläche kann, insbesondere wenn der Reflektor für sichtbares Licht verwendet werden soll, aus einer gespannten Aluminium- oder Silberfolie bestehen.

Nach einer weiteren vorteilhaften Ausführungsform der Erfindung können die Kugeln aus Glas oder Kunststoff sein. Glas ist wegen seiner optischen Eigenschaften vorzuziehen, während Kunststoffkugeln kostengünstiger zu fertigen sind.

Nach einer weiteren Ausgestaltung ist vorgesehen, daß die Reflektorfläche jeweils in einer Äquatorialebene der Kugeln angeordnet ist. Dies läßt sich unter herstellungstechnischen Gesichtspunkten besonders günstig realisieren, wenn die Kugeln jeweils aus zwei Halbkugeln zusammengesetzt werden, wobei auf der ebenen Fläche einer der beiden Halbkugeln die Reflektorfläche ausgebildet wird.

Nach einer weiteren vorteilhaften Ausgestaltung der Erfindung ist eine Vorrichtung zur Verschiebung mindestens einer der beiden Platten relativ zu der anderen der beiden Platten in einer ersten Richtung vorgesehen. Vorteilhaft ist ferner, wenn eine weitere Vorrichtung vorgesehen ist, die eine Verschiebung einer der beiden Platten in einer zweiten, zur ersten Richtung senkrechten Richtung ermöglicht. Mit zwei derartigen Vorrichtungen kann in einem Raumwinkel einer Halbkugel (2π) jede gewünschte Richtung der Flächennormale der Reflexionsflächen eingestellt werden.

Die Vorrichtung bzw. die Vorrichtungen zur Verschiebung mindestens einer der beiden Platten in zueinander senkrechten Richtungen können aus einfachen handbetätigbaren Justierspindeln bestehen. Gemäß einer besonders vorteilhaften Ausbildung der Erfindung ist jedoch hierzu ein Motor vorgesehen, der eine stufenlose Einstellung der Verschiebung in der ersten und/oder in der zweiten Richtung mindestens einer der beiden Platten relativ zu der anderen der beiden Platten ermöglicht. Vorzugsweise handelt es sich dabei um einen Linear- oder Schrittmotor mit Getriebe. Diese Ausführungsform der Erfindung ermöglicht eine bequeme Einstellung der Flächennormale und damit des Reflexionswinkels, eventuell auch ferngesteuert oder nach einer weiteren bevorzugten Ausführungsform - gesteuert durch ein computergestütztes System. So kann beispielsweise mit einem computergestützten System der Reflexionswinkel bei der Verwendung des Reflektors im Zusammenhang mit einem Solarkollektor dem sich ändernden Sonnenstand so nachgeführt werden, daß die Sonnenstrahlung jeweils optimal auf den Solarkollektor gerichtet wird. Die Rechenkapazität eines gewöhnlichen Personal-Computers (PC) hat sich für eine solche Steuerung als ausreichend erwiesen, selbst dann, wenn eine Aneinanderreihung mehrerer Reflektoren gesteuert werden muß.

Um einen gleichmäßigen Anpreßdruck der zwischen den beiden Platten eingespannten Reflektorelemente sicherzustellen, wird vorzugsweise mindestens eine der beiden Platten mit einer elastischen Substanz versehen, bei der es sich vorzugsweise um einen Schaum handelt.

Nach einer bevorzugten Ausführungsform ist ferner vorgesehen, den justierbaren Reflektor gemäß der vorliegenden Erfindung in einem Gehäuserahmen anzuordnen.

Nachfolgend wird die Erfindung anhand von in den Figuren 1 bis 4 schematisch dargestellten Ausführungsbeispielen näher erläutert. Es zeigt:
- Figur 1:: eine perspektivische Ansicht eines justierbaren Reflektors nach einer ersten Ausführungsform;
- Figur 2:: eine perspektivische Ansicht eines aus zwei Halbkugeln zusammengesetzten Reflektorelements;
- Figur 3:: einen Schnitt längs der Schnittlinie III-III der Figur 1; und
- Figur 4:: einen dem Schnitt der Figur 3 entsprechenden Schnitt bei einer modifizierten Ausführungsform.

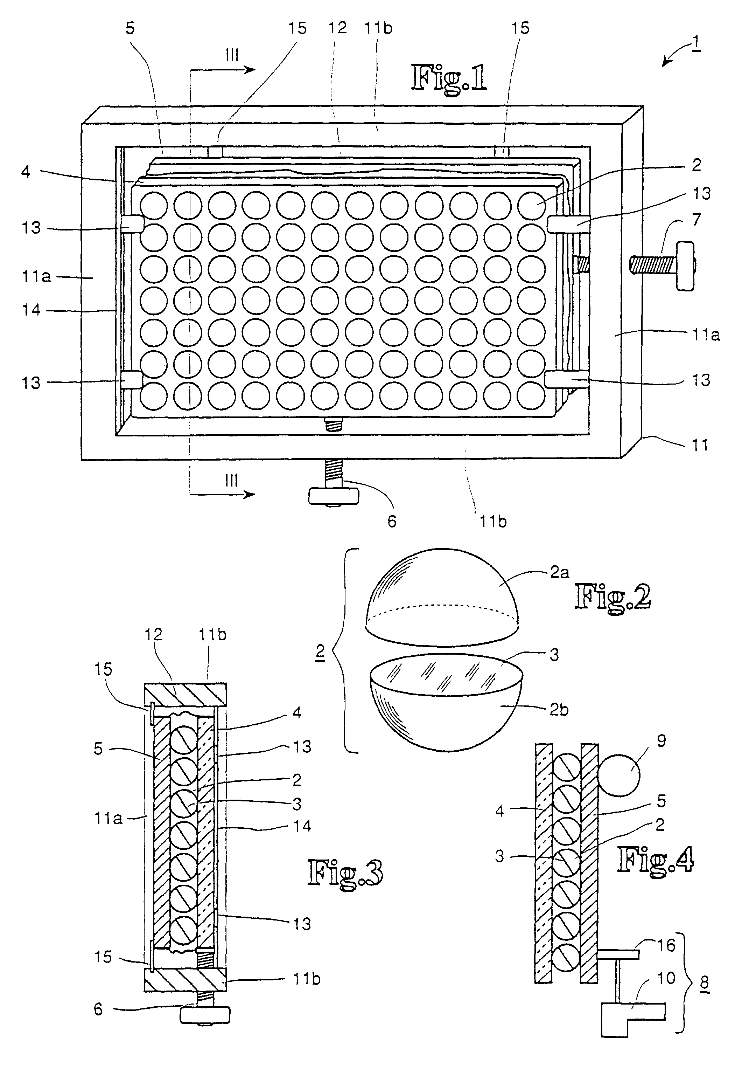

Der in Figur 1 gezeigte justierbare Reflektor 1 weist eine erste transparente planparallele Platte 4 auf, die aus Glas oder Kunststoff bestehen kann. Im Abstand zu der ersten Platte 4 befindet sich parallel zu dieser eine zweite Platte 5. Zwischen den beiden Platten 4 und 5 sind kugelförmige Reflektorelemente 2 eingespannt. In der Zeichnung sind insgesamt 7 x 12 kugelförmige Reflektorelemente 2 vorgesehen, wobei in der Praxis selbstverständlich eine weitaus größere Zahl von Reflektorelementen 2 je nach Gesamtgröße des Reflektors vorgesehen sein kann. Eine typische Größe für einen Reflektor 1 wäre beispielsweise ein Quadratmeter. Eine typische Größe für die kugelförmigen Reflektorelemente 2 wäre beispielsweise 2,5 cm Durchmesser, wobei die einzelnen Kugeln mit einem gegenseitigen Abstand von wenigen Millimetern angereiht sind, so daß in einer Richtung etwa 35 Kugeln und insgesamt etwa 1225 Kugeln in einem Reflektor 1 enthalten sind.

Die beiden Platten 4 und 5 sind durch einen Faltenbalg 12 miteinander luftdicht verbunden, so daß kein Schmutz in den von den beiden Platten 4 und 5 umschlossenen Innenraum eindringen kann. Gleichwohl sind die beiden Platten 4 und 5 nicht starr miteinander verbunden, sondern sie können jeweils in ihrer Ebene im gewissen Grenzen gegeneinander bewegt werden.

Figur 2 zeigt den Aufbau eines Reflektorelements 2. Wie aus Figur 2 ersichtlich, setzt sich ein Reflektorelement 2 aus zwei transparenten Halbkugeln 2a und 2b zusammen, die vorzugsweise aus Kunststoff sind. Auf der Schnittebene der Halbkugel 2b ist eine Reflektorfläche 3 in Form einer aufgeklebten Aluminiumfolie angebracht. Die beiden, in der Figur 2 zu Illustrationszwecken getrennt gezeigten Halbkugeln 2a und 2b sind mittels eines Klebstoffs miteinander verklebt.

Die so aufgebauten Reflektorelemente 2 werden in dem in Figur 1 gezeigten justierbaren Reflektor 1 zwischen den beiden Platten 4 und 5 durch Haftreibung gehalten. Hierbei wirkt unterstützend eine auf der in Figur 1 hinten liegenden Platte 5 angebrachte elastische Schaumschicht, die dafür sorgt, daß alle Reflektorelemente 2 in weiten Grenzen etwa dem gleichen Anpreßdruck unterliegen, der ausreichend ist, um diese reibschlüssig ohne Schlupf zwischen den beiden Platten 4 und 5 zu führen.

Die beiden Platten 4 und 5 sind in einem rechteckigen Rahmen 11 beweglich gelagert. Der Rahmen besteht aus zwei Vertikalästen 11a und zwei Horizontalästen 11b. Bei der gewählten Art der Lagerung ist eine Verschiebung der Platte 4 in Vertikalrichtung (vertikal in bezug auf die Darstellung der Figur 1) und eine Verschiebung der Platte 5 in Horizontalrichtung (horizontal in bezug auf die Darstellung der Figur 1) möglich. Hierzu ist die Platte 4 mit insgesamt vier Gleitfüßen 13 versehen, die jeweils in entsprechende, an den Vertikalästen 11a des Rahmens 11 angebrachte Führungsnuten 14 eingreifen.

Mittels einer Gewindespindel 6, die in einer Gewindebohrung eines Horizontalastes 11b des Rahmens 11 geführt ist und deren Spitze mit der Platte 4 verbunden ist, kann die Platte 4 präzise in Vertikalrichtung parallel verschoben werden, wobei die Bewegung exakt in der Ebene der Platte 4 erfolgt. In der gleichen Weise ist die in der Darstellung der Figur 1 hinten liegende Platte 5 mit Gleitfüßen 15 versehen, die in Führungsnuten (in der Darstellung der Figur 1 nicht zu erkennen) in den Horizontalästen 11b des Rahmens 11 eingreifen und so eine horizontale Verschiebung der Platte 5 ermöglichen. Mittels einer weiteren Gewindespindel 7, die in einer Gewindebohrung eines Vertikalastes 11a des Rahmens 11 geführt ist, läßt sich die hintere Platte 5 in Horizontalrichtung präzise positionieren. Durch die Führung der beiden Platten 4 und 5 ist gewährleistet, daß diese stets parallel bleiben und ihr gegenseitiger Abstand konstant bleibt, so daß die zwischen den Platten 4 und 5 eingespannten kugelförmigen Reflektorelemente 2 stets mit konstanter Kraft angepreßt werden.

Durch Betätigung der Gewindespindel 6 und eine damit verbundene vertikale Verschiebung der Platte 4 (vertikal in bezug auf die Darstellung der Figur 1) kann die Ausrichtung der Reflektorflächen 3 in vertikaler Richtung erzielt werden. Eine Verschiebung der Platte 4 um nur wenige Zentimeter reicht aus, um praktisch jeden gewünschten Winkel in Vertikalrichtung einzustellen. Aufwendige und platzbeanspruchende Schwenkvorrichtungen des Reflektors sind nicht erforderlich.

In gleicher Weise kann durch horizontale Verschiebung der rückseitigen Platte 5 (horizontal in bezg auf die Darstellung der Figur 1) bereits durch eine Verschiebung von wenigen Zentimetern eine Justierung der Flächennormalen der Reflektorflächen 3 unter jedem gewünschten Winkel erzielt werden.

In der Schnittdarstellung der Figur 3 ist besonders gut zu erkennen, wie die kugelförmigen Reflektorelemente 2 zwischen die durch den Faltenbalg 12 abgedichteten Platten 4 und 5 eingespannt sind. In Figur 3 sind insbesondere die an der Platte 4 angeordneten Gleitfüße 13 zu erkennen, die in der Führungsnut 14 gleiten, um eine vertikale Verschiebung der Platte 4 (vertikal in bezug auf die Darstellung der Figur 3) zu ermöglichen, wozu die Justierspindel 6 betätigt wird.

Ferner sind in Figur 3 die Gleitfüße 15 zu erkennen, die in den Horizontalästen 11b des Rahmens 11 geführt sind, um eine horizontale Führung der Platte 5 zu gewährleisten.

Figur 4 zeigt eine der Schnittdarstellung der Figur 3 entsprechende Darstellung eines modifizierten Ausführungsbeispiels. Bei diesem Ausführungsbeispiel, bei dem wiederum die Reflektorelemente 2 zwischen zwei Platten 4 und 5 eingespannt sind, ist eine der beiden Platten, nämlich die transparente Platte 4, fest mit einem Rahmen (nicht dargestellt) verbunden. Lediglich die Platte 5 ist beweglich gelagert, wobei zur Bewegung derselben ein Motor 10 mit Getriebe sowie ein reibschlüssig mit der Platte 5 verbundenes Antriebsrad 16 dient. Mittels dieser aus dem Motor 10 mit Getriebe und dem Antriebsrad 16 bestehenden Antriebsvorrichtung 8 kann die Platte 5 senkrecht zur Zeichenebene, das heißt in horizontaler Richtung bewegt werden. Eine entsprechende Vorrichtung 9 zur Bewegung der Platte 5 in vertikaler Richtung ist entsprechend aufgebaut, jedoch um einen Winkel von 90° geschwenkt angeordnet. Details der Befestigung der Antriebsvorrichtungen 8 und 9 sind aus Gründen der Übersichtlichkeit weggelassen.

## Patentansprüche

1. Justierbarer Reflektor (1), der mehrere, jeweils eine Reflektorfläche (3) aufweisende Reflektorelemente (2) aufweist, die schwenkbar angeordnet sind, **dadurch gekennzeichnet, daß** es sich bei den Reflektorelementen (2) um zumindest teilweise transparente Kugeln handelt, die zwischen zwei planparallelen Platten (4, 5) eingespannt sind, von denen mindestens eine Platte (4) aus einem transparenten Material besteht, wobei mindestens eine der beiden Platten (4, 5) relativ zur anderen der beiden Platten (5, 4) unter Beibehaltung ihres Abstands zur anderen Platte verschiebbar ist.

2. Reflektor nach Anspruch 1, **dadurch gekennzeichnet, daß** die Reflektorelemente (2) in mindestens zwei Richtungen schwenkbar sind.

3. Reflektor nach Anspruch 1 oder 2, **dadurch gekennzeichnet, daß** die Reflektorelemente (2) gegenseitig gekoppelt und gemeinsam schwenkbar sind.

4. Reflektor nach mindestens einem der Ansprüche 1 bis 3, **dadurch gekennzeichnet, daß** die Reflektorfläche (3) eine gespannte Aluminium- oder Silberfolie aufweist.

5. Reflektor nach mindestens einem der Ansprüche 1 bis 4, **dadurch gekennzeichnet, daß** die Kugeln aus Glas oder Kunststoff sind.

6. Reflektor nach mindestens einem der Ansprüche 1 bis 5, **dadurch gekennzeichnet, daß** die Reflektorfläche (3) jeweils in einer Äquatorialebene der Kugeln angeordnet ist.

7. Reflektor nach mindestens einem der Ansprüche 1 bis 6, **dadurch gekennzeichnet, daß** sich die Kugeln aus jeweils zwei Halbkugeln (2a, 2b) zusammensetzen.

8. Reflektor nach Anspruch 7, **dadurch gekennzeichnet, daß** mindestens eine der beiden Halbkugeln (2a, 2b) aus einem transparenten Material besteht.

9. Reflektor nach mindestens einem der Ansprüche 1 bis 8, **dadurch gekennzeichnet, daß** eine Vorrichtung (6; 9) zur Verschiebung mindestens einer der beiden Platten (4, 5) relativ zur anderen der beiden Platten (5, 4) in einer ersten Richtung vorgesehen ist.

10. Reflektor nach Anspruch 9, **dadurch gekennzeichnet, daß** eine Vorrichtung (7; 8) zur Verschiebung mindestens einer der beiden Platten (4, 5) relativ zur anderen der beiden Platten (5, 4) in einer zweiten, zur ersten Richtung senkrechten Richtung vorgesehen ist.

11. Reflektor nach Anspruch 9 oder 10, **dadurch gekennzeichnet, daß** die Vorrichtungen (8, 9) zur Verschiebung einen Motor (10) aufweisen, der eine stufenlose Einstellung der Verschiebung in der ersten und/oder in der zweiten Richtung mindestens einer der beiden Platten (4, 5) relativ zur anderen der beiden Platten (5, 4) vorsieht.

12. Reflektor nach Anspruch 11, **dadurch gekennzeichnet, daß** es sich bei dem Motor (10) um einen Linear- oder Schrittmotor mit Getriebe handelt.

13. Reflektor nach mindestens einem der Ansprüche 9 bis 12, **dadurch gekennzeichnet, daß** die Vorrichtung (8, 9) zur Verschiebung in der ersten und/oder in der zweiten Richtung von einem computergestützten System gesteuert wird.

14. Reflektor nach mindestens einem der Ansprüche 1 bis 13, **dadurch gekennzeichnet, daß** mindestens eine der beiden Platten (4, 5) auf der den Reflektorelementen (2) zugewandten Seite mit einer elastischen Substanz zur gleichmäßigen Verteilung des Drucks auf die Reflektorelemente (2) beschichtet ist.

15. Reflektor nach Anspruch 14, **dadurch gekennzeichnet, daß** es sich bei der Substanz um Schaum handelt.

16. Reflektor nach mindestens einem der Ansprüche 1 bis 15, **dadurch gekennzeichnet, daß** er in einem Gehäuserahmen (11) angeordnet ist.

## Claims

1. Adjustable reflector (1), which has several rotatable reflector elements (2), each of which has a reflective surface (3), **characterized in that** the reflector elements (2) are balls which are at least partially transparent and which are mounted between two plane-parallel plates (4, 5), of which at least one plate (4) consists of a transparent material and whereby at least one of the two plates (4, 5) can be moved relative to the other one of the two plates (5, 4) while maintaining its distance from the other plate.

2. Reflector in accordance with claiml, **characterized in that** the reflector elements (2) can be rotated in at least two directions.

3. Reflector in accordance with claim 1 or 2, **characterized in that** the reflector elements (2) are interconnected and can be rotated together.

4. Reflector in accordance with at least one of the claims 1 to 3, **characterized in that** the reflective surface (3) is covered with aluminum or silver foil.

5. Reflector in accordance with at least one of the claims 1 to 4, **characterized in that** the balls are made of glass or plastic.

6. Reflector in accordance with at least one of the claims 1 to 5, **characterized in that** the reflective surface (3) is arranged in the equatorial plane of the balls.

7. Reflector in accordance with at least one of the claims 1 to 6, **characterized in that** the balls consist of two hemispheres (2a, 2b).

8. Reflector in accordance with claim 7, **characterized in that** at least one of the two hemispheres (2a, 2b) consists of a transparent material.

9. Reflector in accordance with at least one of the claims 1 to 8, **characterized in that** a device (6; 9) is provided which will move at least one of the two plates (4, 5) in a first direction relative to the other one of the two plates (5, 4).

10. Reflector in accordance with claim 9, **characterized in that** a device (7; 8) is provided which will move at least one of the two plates (4, 5) in a second direction relative to the other one of the two plates (5, 4) and perpendicular to the first direction.

11. Reflector in accordance with claim 9 or 10, charaterized in that the devices (8, 9) for moving the plates have a motor (10) which provides a fully adjustable setting for moving at least one of the two plates (4, 5) relative to the other one of the two plates (5, 4) in the first and/or the second direction.

12. Reflector in accordance with claim 11, **characterized in that** the motor (10) is a linear or step motor with gears.

13. Reflector in accordance with at least one of the claims 9 to 12, **characterized in that** the device (8,9) for moving the plates in the first and/or the second direction is controlled by a computer-supported system.

14. Reflector in accordance with at least one of the claims 1 to 13, **characterized in that** at least one of the two plates (4, 5) is coated on the side facing the reflector elements (2) with an elastic substance to distribute the pressure on the reflector elements (2) evenly.

15. Reflector in accordance with claim 14, **characterized in that** the substance is foam.

16. Reflector in accordance with at least one of the claims 1 to 15, **characterized in that** it is fitted in a housing frame (11).

## Revendications

1. Réflecteur (1) ajustable, qui comporte plusieurs éléments de réflecteur (2) qui présentent chacun une surface de réflecteur (3) et qui sont montés basculables, **caractérisé en ce que**, en ce qui concerne les éléments de réflecteur (2), il s'agit de billes, au moins partiellement transparentes, qui sont serrées entre deux plaques (4, 5), à faces planes et parallèles, dont au moins une plaque (4) est en une matière transparente, au moins l'une des deux plaques (4, 5) pouvant être déplacée en translation vis-à-vis de l'autre des deux plaques (5, 4) tout en maintenant son espacement vis-à-vis de l'autre plaque.

2. Réflecteur selon la revendication 1, **caractérisé en ce que** les éléments de réflecteur (2) sont basculables dans au moins deux directions.

3. Réflecteur selon la revendication 1 ou 2, **caractérisé en ce que** les éléments de réflecteur (2) sont accouplés mutuellement et sont basculables en commun.

4. Réflecteur selon au moins l'une des revendications 1 à 3, **caractérisé en ce que** la surface de réflecteur (3) comporte une feuille d'aluminium ou d'argent tendue.

5. Réflecteur selon au moins l'une des revendications 1 à 4, **caractérisé en ce que** les billes sont en verre ou en matière plastique.

6. Réflecteur selon au moins l'une des revendications 1 à 5, **caractérisé en ce que** les surfaces de réflecteur (3) sont disposées chacune dans un plan équatorial respectif des billes.

7. Réflecteur selon au moins l'une des revendications 1 à 6, **caractérisé en ce que** les billes se composent chacune de deux demi-billes (2a, 2b) respectives.

8. Réflecteur selon la revendication 7, **caractérisé en ce qu'**au moins l'une des deux demi-billes (2a, 2b) est en une matière transparente.

9. Réflecteur selon au moins l'une des revendications 1 à 8, **caractérisé en ce qu'**il est prévu un dispositif (6 ; 9) servant au déplacement en translation d'au moins l'une des deux plaques (4, 5) vis-à-vis de l'autre des deux plaques (5, 4) dans une première direction.

10. Réflecteur selon la revendication 9, **caractérisé en ce qu'**il est prévu un dispositif (7 ; 8) servant au déplacement en translation d'au moins l'une des deux plaques (4, 5) vis-à-vis de l'autre des deux plaques (5, 4) dans une seconde direction perpendiculaire à la première direction.

11. Réflecteur selon la revendication 9 ou 10, **caractérisé en ce que** les dispositifs de déplacement en translation (8, 9) comprennent un moteur (10) qui prévoit un réglage continu du déplacement en translation, dans la première et/ou dans la seconde directions, d'au moins l'une des deux plaques (4, 5) vis-à-vis de l'autre des deux plaques (5, 4).

12. Réflecteur selon la revendication 11, **caractérisé en ce que**, en ce qui concerne le moteur (10), il s'agit d'un moteur linéaire ou d'un moteur pas-à-pas.

13. Réflecteur selon au moins l'une des revendications 9 à 12, **caractérisé en ce que** le dispositif (8, 9) servant au déplacement en translation dans la première et/ou dans la seconde directions est commandé par un système assisté par ordinateur.

14. Réflecteur selon ou moins l'une des revendications 1 à 13, **caractérisé en ce qu'**au moins l'une des deux plaques (4, 5) est revêtue, sur la face tournée vers les éléments de réflecteur (2), d'une substance élastique servant à une répartition uniforme de la pression sur les éléments de réflecteur (2).

15. Réflecteur selon la revendication 14, **caractérisé en ce que**, en ce qui concerne la substance, il s'agit d'une matière cellulaire.

16. Réflecteur selon au moins l'une des revendications 1 à 15, **caractérisé en ce qu'**il est disposé dans un bâti de boîtier (11).
